# EUROPÄISCHE PATENTSCHRIFT

(11) **EP 2 000 604 B1**
(45) Veröffentlichungstag und Bekanntmachung des Hinweises auf die Patenterteilung: **04.08.2010**
(21) Anmeldenummer: 07011086.1
(22) Anmeldetag: 06.06.2007
(51) Int. Cl.: E03F 5/12

(54) **Verfahren zur qualitativen und quantitativen Abwassersteuerung an Entalstungsanlagen**
Method for qualitative and quantitative waste water control in sewer emergency outlets
Procédé de contrôle qualitatif et quantitatif des eaux usées dans des installations de décharge de réseaux d'égouts

(43) Veröffentlichungstag der Anmeldung: 10.12.2008
(73) Patentinhaber: Weikopf, Manfred, 47802 Krefeld (DE)
(72) Erfinder: Weikopf, Manfred, 47802 Krefeld (DE)

(56) Entgegenhaltungen:
- EP-A- 0 783 056
- DE-A1- 4 016 378
- DE-A1- 4 314 198

## Beschreibung

Die Erfindung beinhaltet ein Verfahren zur qualitativen und quantitativen Abwassersteuerung an Entlastungsanlagen, bei dem ein mit unterschiedlichen Messsonden bestückter Sondenflügel in einem Abwasserkörper unterhalb einer Entlastungssteuerungsebene eintaucht und *je nach Bedarf* durch *eine der vier* unterschiedlichen Anordnungen von Verschubelementen verfahren wird, um mittels schichtabhängiger Online Messung der Messsonden eine höhenmäßige, qualitative und gegebenenfalls quantitative Aussteuerung der *unterschiedlichen* Entlastungsanlagen vorzugeben.
Hierbei werden die Sondenflügel bei dem Verschubelement *(Verschubzylinder)* am Schubstangenkopf des Verschubzylinders, bei dem Verschubelement *(Seilrollenführung)* an der Seilrollenführung, bei dem Verschubelement *(verfahrbare Pumpstaion)* an der vertikal verfahrbaren Pumpstation, auch als Entlastungsanlage *(Pumpstation)* bezeichnet, mittels einer Traverse unterhalb der Ansaugebene und bei dem Verschubelement *(Wehrkante Entlastungswehr)* an einer vorgelagerten Traverse an der Wehrkante eines Entlastungswehres befestigt.
Die schichtweise Messung von Abwasserinhaltsstoffen in eingestauten Abwasserkörpern wurde zur Auswertung der Schmutzfrachtentlastung an der Entlastungswehranlage des Stauraumkanales in Burscheid Luisental, anlässlich des Forschungsvorhabens **{1}** mittels einer SAK Sonde, die fest auf der Wehrkante befestigt war, vorgenommen. *Diese technische Umsetzung entspricht einem Detailaspekt der Beschreibung gemäß* DE-A-4016378. Auf Grund eigener Messungen von "Schichtkonzentrationen SAK Messung KM NW 2400" **{2}**, hat der Unterzeichner festgestellt, dass nach längeren Einstauzeiten, eine Qualitätsschichtung derart auftritt, die im oberen 2/3 *h_{[WSP]} Bereich des Abwasserkörpers nahezu konstant ist und unterhalb des Konzentrationsknickes von ca. 1/3 *h_{[WSP]}; hier ca. 36 cm, in Richtung Sohlbereich [WSP = 0] stetig zunimmt.

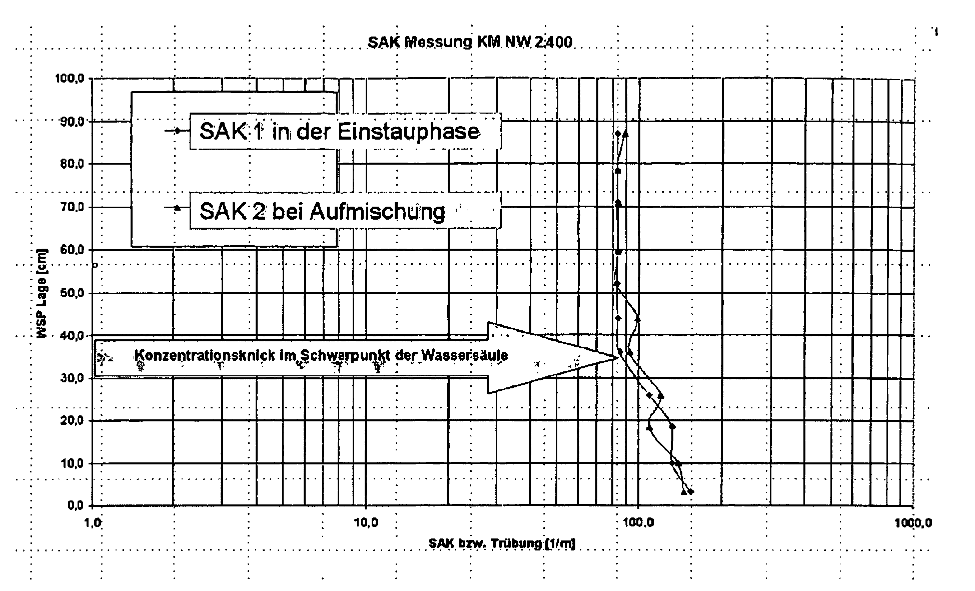

### Literaturhinweis:

**{1}** Prof. Dr.-Ing. Pinnekamp;
   Untersuchung zum Entlastungs- und Betriebsverhalten von gesteuerten Stauraumkanälen mit mittiger Entlastung; Forschungsbericht der RWTH Aachen, August 2004
**{2}** Dipl.-Ing. M. Weikopf
   Eigene Untersuchungen; ASA Technik GmbH 2003

Die kontinuierliche Qualitätsmessung mit einer SAK Sonde auf der Wehrkante hat den Nachteil, dass erst bei einer Überfallhöhe mit voller Abdeckung des Messfensters eine Online Messauswertung stattfinden kann. Eine Messauswertung ist in diesem Fall nicht möglich, wenn das Messfenster nicht abgedeckt ist. Dies führt bei kleineren Entlastungen zu einem höheren Fehlerquotienten, der bei einer zukünftigen Messwertlösung für Entlastungsanlagen der Kanalisation in die Vorflut nicht zu vertreten ist. Darüber hinaus wird es zur Überwachung möglicher Entlastungskonzentrationen immer wichtiger, das diese unterschiedlichen Abwasserinhaltsstoffe durch spezielle Qualitätssonden wie z.B. P_{ges} ; NH4; TOC; SAK, NO₃-N, Trübung; O₂ und pH online überwacht und archiviert werden.

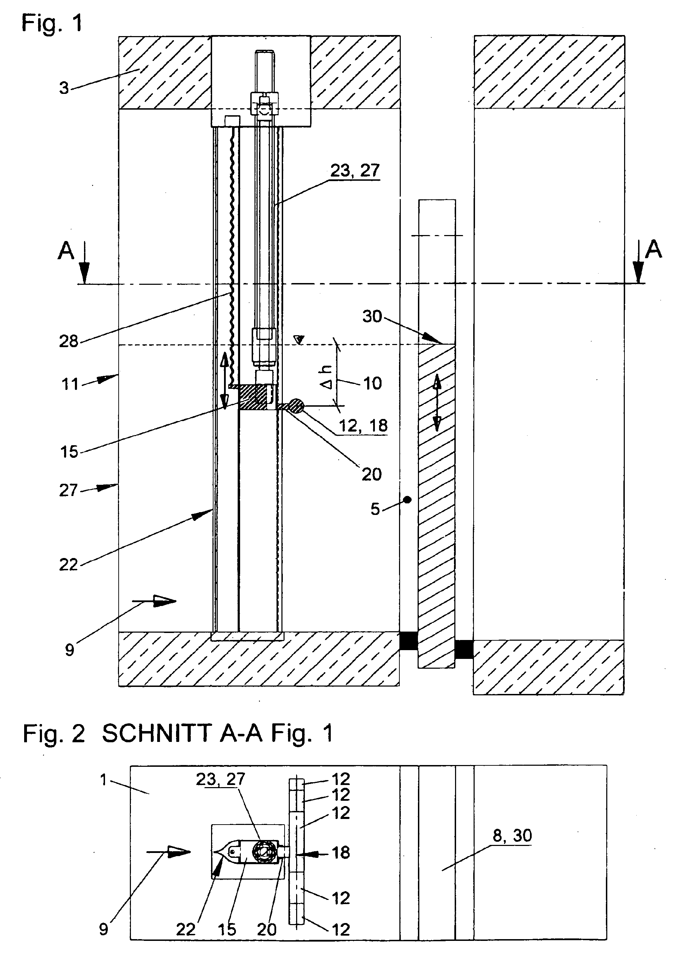

DE-A-40 16 378 offenbart ein gattungsgemäßes Verfahren.
**Aufgabe der vorliegenden Erfindung ist es**, das aus der DE-A-40 16 378 bekannte Verfahren zu verbessern. Die Aufgabe wird durch ein Verfahren mit den Merkmalen des Anspruchs 1 gelöst.
Damit ein ordnungsgemäßer Verschub der Sondenflügel im Abwasserkörper ohne kritische Verzopfungen durch Abwasserinhaltsstoffe im Bereich der Verschubelemente *(Verschubzylinder; Seilrollenführung)* und der Versorgungskabel erfolgen kann, werden diese Anlagenteile mit einem Umströmungsschutz im gesamten Abwasserkörper umgeben, der im Sohlbereich und Deckenbereich fest verankert wird. Bei der Anordnung des Sondenflügels am Verschubelementes *(Wehrkante Entlastungswehr)* wird verfahrensgemäß die Anordnung einer "Schwimmenden Tauchwand" als adäquate und vorteilhafte Lösung zum Umströmungsschutz angesehen. Ansonsten ist ausbildungstechnisch vorgesehen, dass der Umströmungsschutz als korrosionsfeste Blechkonstruktion auch gleichzeitig als allseitiges Gleitlager für den Traversenkopf der Traverse insbesondere für die Verschubelemente *(Verschubzylinder; Seilrollenführung)* ausgebildet wird.
Mögliche Ausführungsbeispiele des Verfahrens und seiner technischen Umsetzung werden in den Zeichnungen näher erläutert:
Es zeigt in **Fig.1** gemäß Verschubelement *(Verschubzylinder)* [23] einen senkrechten Schnitt "A-A" durch eine Kanalisationsanlage [11], in der gegen die Fließrichtung [9] oberhalb einer vertikal aussteuerbaren Entlastungsanlage *(Entlastungswehr)* [5] ein Sondenflügel [18], über eine Traverse [20], an einem Schubstangenkopf [15] eines steuerbaren Verschubzylinders [27] angebracht ist und im Schutze eines Umströmungsschutzes [22] vertikal verfahren werden kann, wobei der Verschubzylinder [27] im Deckenbereich [3] hängend befestigt ist. Weiterhin wird ersichtlich, dass der Sondenflügel [18] mit unterschiedlichen Messsonden [12] bestückt, um ein vorgebbares Höhenmaß Δh [10] unterhalb der Wehrkante [30] einer vertikal verfahrbaren Entlastungsanlage *(Entlastungswehr)* [5] angeordnet ist.
Die steuerungstechnische Anbindung der Messsonden [12] innerhalb des Sondenflügels [18] wird über ein entsprechend angeordnetes Versorgungskabel [28] zum allseitig gleitend ausgebildeten Schubstangenkopf [15] innerhalb des Umströmungsschutzes [22] sichergestellt.

Es zeigt in **Fig. 2** gemäß Verschubelement *(Verschubzylinder)* [23] einen waagerechten Schnitt "A-A" gemäß Fig. 1, aus dem zu erkennen ist, dass der Sondenflügel [18], der mit mehreren Messsonden [12] bestückt sein kann, über eine Traverse [20] mit dem Schubstangenkopf [15] verbunden ist und mittels eines Verschubzylinders [27] vertikal verfahren werden kann. Weiterhin ist die Anordnung des Verschubelementes *(Verschubzylinder)* [23] innerhalb des Umströmungsschutzes [22] im Abwasserkörper [1] vor dem Entlastungswehr [8] in Fließrichtung [9] zur Wehrkante [30] ersichtlich.

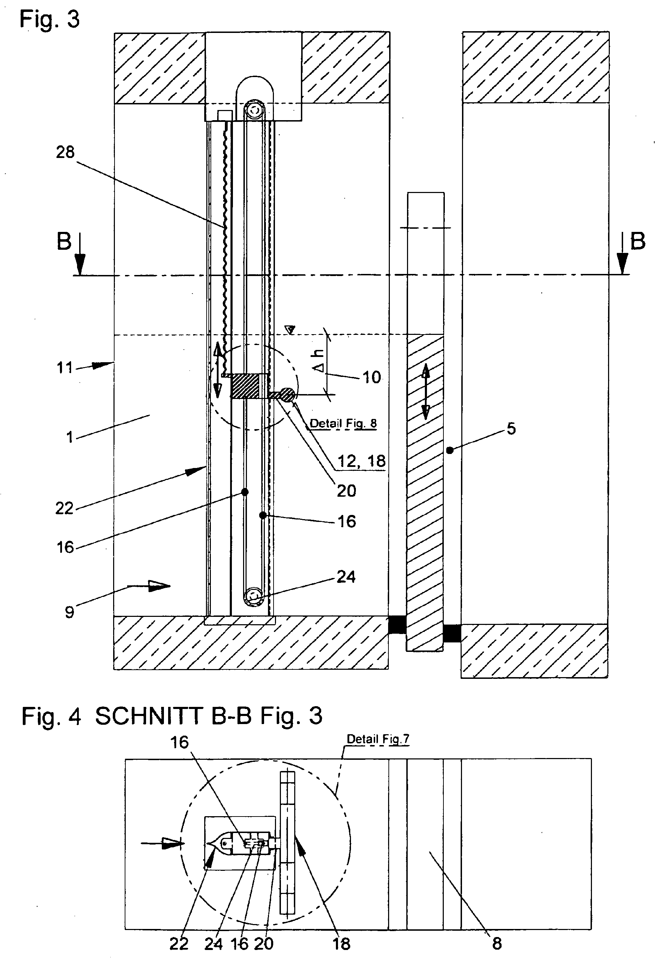

Es zeigt in **Fig. 3** gemäß Verschubelement *(Seilrollenführung)* [24] einen senkrechten Schnitt "B-B" durch eine Kanalisationsanlage [11], in der gegen die Fließrichtung [9] oberhalb einer vertikal aussteuerbaren Entlastungsanlage *(Entlastungswehr)* [5] ein Sondenflügel [18], über eine Traverse [20], an einer vertikal verfahrbaren Seilrollenführung [16] befestigt und von einem Umströmungsschutz [22] im Gesamtbereich des Abwasserkörpers [1] umgeben ist, damit Verzopfungen am mitgeführten Versorgungskabel [28] über die Traverse [20] zu den Messsonden [12] verhindert werden können.

Es zeigt in **Fig. 4** gemäß Verschubelement *(Seilrollenführung)* [24] einen waagerechten Schnitt "B-B" aus dem zu erkennen ist, dass analog zu Fig.2 das Verschubelement *(Seilrollenführung)* [24] vor einem Entlastungswehr [26] mit seiner Seilrollenführung [16] innerhalb des Umströmungsschutzes [22] angeordnet, die vertikale Verfahrung des Sondenflügels [18] über eine Traverse [20] bewirkt.

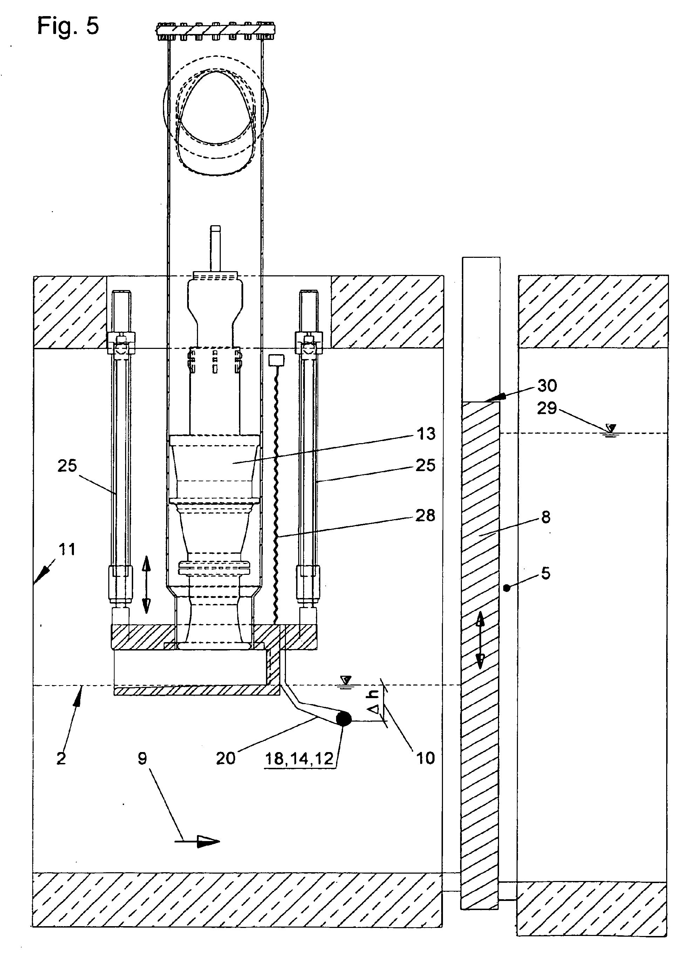

Es zeigt in **Fig. 5** gemäß Verschubelement *(verfahrbare Pumpstation)* [25] einen senkrechten Schnitt "C-C" durch eine Kanalisationsanlage [11] mit einer integrierten Pumpstation [13], bei der gegen die Fließrichtung [9] oberhalb einer vertikal aussteuerbaren Entlastungsanlage *(Pumpstation)* [6] ein Sondenflügel [18], über eine Traverse [20], mit dem Höhenmaß Δh [10] unterhalb der Ansaugebene [2] an der Pumpstation [13] befestigt, mit der Pumpstation [ 13] verfahren werden kann, um unkritische Abwassermengen mittels Online-Steuerung durch eine Qualitätssonde [14], über das Entlastungswehr [8] mit seiner Wehrkante [30] in einen hochwasserführenden Vorfluter [29] zu pumpen, welches insbesondere durch die höher liegende Wehrkante [30] des Entlastungswehres [8] zum hochwasserführenden Vorfluter [29] verdeutlicht wird. Weiterhin ist erkennbar, dass die Messsonden [12] des Sondenflügels [18] über ein Versorgungskabel [28] mit einer nicht näher dargestellten Steuerungsanlage verbunden werden muss.

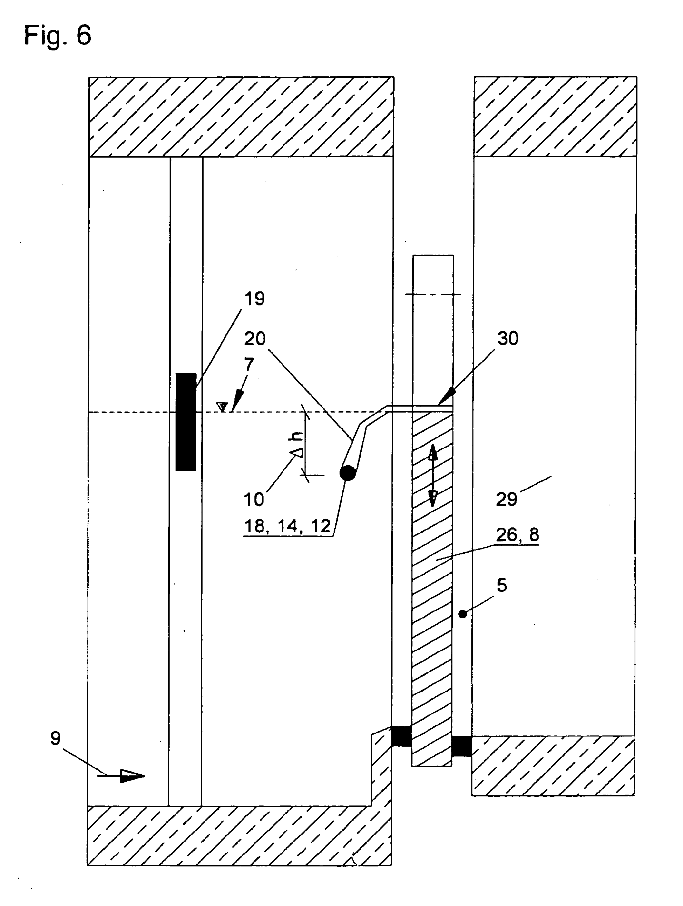

Es zeigt in **Fig. 6** gemäß Verschubelement *(Wehrkante Entlastungswehr)* [26] einen senkrechten Schnitt "D-D" durch eine Entlastungsanlage *(Entlastungswehr)* [5] mit einem Entlastungswehr [8], bei dem ein Sondenflügel [18] mit den notwendigen Qualitätssonden [14] oder sonstigen Messsonden [12] über eine Traverse [20] mit der Wehrkante [30] verbunden sind und der Sondenflügel [18] um ein vorgebbares Höhenmaß Δh [10] unterhalb der Entlastungssteuerungsebene [7], die in diesem Falle der Wehrkante [30] entspricht, entsprechend mitgesteuert werden kann, um vorsorglich eine zumindest qualitative Entlastung zum Vorfluter [29] zu ermöglichen. Um eine Verzopfung des Sondenflügels [18] zu verhindern, ist gegen die Fließrichtung [9] oberhalb des Sondenflügels [18] eine schwimmende Tauchwand [19] angeordnet.

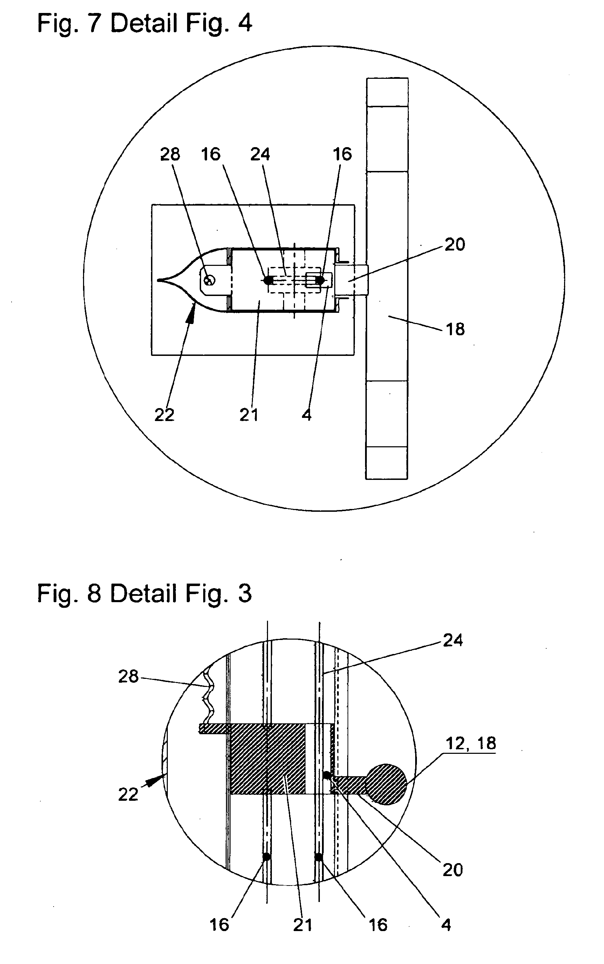

Es zeigt in **Fig. 7** gemäß Verschubelement *(Seilrollenführung)* [24] einen waagerechten, vergrößerten Schnitt "B-B" gemäß Fig. 4 aus dem zu erkennen ist, dass der Traversenkopf [21] der Traverse [20] innerhalb des Umströmungsschutzes [22] an einer Seilrollenführung [16] befestigt ist und weiterhin zumindest an der entgegengesetzten Stelle innerhalb des Traversenkopfes [21] eine Durchlauföffnung [4] besitzt, damit eine umlaufende, vertikale Verfahrung des Seilrollenführung [16] erreicht werden kann. Erkennbar ist ebenfalls das Versorgungskabel [28], das über die Traverse [20] steuerungstechnisch mit dem Sondenflügel [18] verbunden sein muss.

Es zeigt in **Fig. 8** eine Detailvergrößerung gemäß **Fig.3** bei der die zwangsartig gleitende Führung des Traversenkopfes [21] an der Seilrollenführung [16] innerhalb des Umströmungsschutzes [22] und weiterhin die steuerungstechnische Anbindung der zugehörigen Messsonden [12] des Sondenflügels [18] über die Traverse [20] mittels eines Versorgungskabels [28] verdeutlicht wird. Zu erkennen ist ebenfall die, bei diesem Verschubelement *(Seilrollenführung)* [24] notwendige Durchlauföffnung [4] für die Seilrollenführung [16] des Traversenkopfes [21].

### Aufstellung der Bezugszeichen

[1] Abwasserkörper
[2] Ansaugebene
[3] Deckenbereich
[4] Durchlauföffnung
[5] Entlastungsanlage *(Entlastungswehr)*
[6] Entlastungsanlage *(Pumpstation)*
[7] Entlastungssteuerungsebene
[8] Entlastungswehr
[9] Fließrichtung
[10] Höhenmaß Δh
[11] Kanalisationsanlage
[12] Messsonde
[13] Pumpstation
[14] Qualitätssonde
[15] Schubstangenkopf
[16] Seilrollenführung
[17] Sohlbereich
[18] Sondenflügel
[19] Tauchwand (schwimmend)
[20] Traverse
[21] Traversenkopf
[22] Umströmungsschutz
[23] Verschubelement (Verschubzylinder)
[24] Verschubelement (Seilrollenführung)
[25] Verschubelement (verfahrbare Pumpstation)
[26] Verschubelement (Wehrkante Entlastungswehr)
[27] Verschubzylinder
[28] Versorgungskabel
[29] Vorfluter
[30] Wehrkante

## Patentansprüche

1. Verfahren zur qualitativen und quantitativen Abwassersteuerung an Entlastungsanlagen *[5]*; *[6]*, bei dem unterschiedliche Messsonden [12] in einem Abwasserkörper [1] unterhalb einer Entlastungssteuerungsebene [7] eintauchen, um mittels schichtabhängiger Online Messung der Messsonden [12] eine höhenmäßige, qualitative und gegebenenfalls quantitative Aussteuerung der jeweiligen Entlastungsanlage *[5]*; *[6]* vorzugeben, **dadurch gekennzeichnet,**
**dass** ein Sondenflügel [18] mit den mehreren unterschiedlichen Messsonden [12] bestückt ist, der durch ein Verschubelement *[23]*; *[24]*; *[25]*; *[26]* verfahren wird,
wobei gemäß einer ersten Variante das Verschubelement ein Verschubzylinder [27] ist, und der Sondenflügel [18] am Schubstangenkopf [15] befestigt ist, wobei gemäß einer zweiten Variante das Verschubelement eine Seilrollenführung [16] ist, an der der Sondenflügel [18] befestigt ist und verfahren wird,
wobei gemäß einer dritten Variante das Verschubelement eine vertikal verfahrbare Pumpstation [13] ist, welche auch als Entlastungsanlage bezeichnet wird, und der Sondenflügel [18] mittels einer Traverse [20] unterhalb der Ansaugebene [2] befestigt ist,
oder
wobei gemäß einer vierten Variante das Verschubelement ein vertikal verfahrbares Entlastungswehr [8] darstellt und der Sondenflügel [18] an einer Traverse [20] der Wehrkante [30] befestigt ist.

2. Verfahren nach Anspruch 1, **dadurch gekennzeichnet, dass** sich der Sondenflügel [18] im Entlastungsmodus der Entlastungsanlagen [5]; [6] zumindest um das Höhenmaß Δh [10] unterhalb der Wehrkante [30] der als Entlastungswehr ausgebildete Entlastungsanlage [5] oder aber bei der als vertikal verfahrbare Pumpstation [13] ausgebildete Entlastungsanlage [6], unterhalb der unkritischen Ansaugebene [2] befindet und weiterhin bei den als Verschubzylinder [23] oder Seilrollenführung ausgebildeten Verschubelementen die zugehörigen Versorgungskabel [28] zu den Messsonden [12] mit einem Umströmungsschutz [22] vom Sohlbereich [17] bis zum Deckenbereich [3] des Abwasserkörpers [1] umgeben ist.

3. Verfahren nach Anspruch 1 und 2, **dadurch gekennzeichnet, dass** die vertikale Aussteuerung der jeweiligen Entlastungsanlage *[5]*; *[6]* unterhalb der Entlastungssteuerungsebene [7], oder auch Ansaugebene [2] bei einer qualitätsunkritischen Online Messung zumindest einer Qualitätssonde [14] nach unten; ansonsten bei Erfassung einer qualitätskritischen Online Messung zumindest einer Qualitätssonde [14] nach oben vollzogen wird.

4. Verfahren nach Anspruch 1 bis 3, **dadurch gekennzeichnet, dass** der Traversenkopf [21] der Traverse [20] innerhalb des Umströmungsschutzes [22] bei den als Verschubzylinder [23] oder Seilrollenführung [24] ausgebildeten Verschubelementen allseitig gleitend geführt werden kann und zumindest beim als Seilrollenführung [24] ausgebildeten Verschubelement eine Durchlauföffnung [4] für die freilaufende Seilrollenführung [16] vorhanden ist.

## Claims

1. Method for qualitative and quantitative waste water control in sewer emergency outlets [5]; [6] with different measurement sensors [12] which dip below a discharge level in a wastewater body [1] and by means of layer dependent online measuring using the measurement sensors [12] to provide a depth-related, qualitative and if necessary quantitative rejection of the respective emergency outlets [5]; [6] **indicated by this,**
that a sensor wing [18], which is equipped with several various measurement sensors [12] which can be raised or lowered by a moving element [23]; [24]; [25]; [26],
that in accordance with a first variant, where the moving element [23] means a moveable cylinder [27] on which the sensor wing [18] is fastened at the push rod head [15],
that in accordance with a second variant, where the moving element [24] means a pulley rope guidance [16] on which the sensor wing [18] is fastened and can be moved up and down,
that in accordance with a third variant, where the moving element [25] means a vertically lifting pump station, which one is described as an emergency outlet [6], where the sensor wing [18] by means of a sensor wing adapter [20] is fastened below an intake level [2], or
that in accordance with a fourth variant the moving element [26] means a vertically lifting discharge weir [8], where the sensor wing [18] is fastened at the sensor wing adapter [20] of the weir edge [30].

2. Method pursuant to Claim 1, indicated by this, that the sensor wing [18] in the discharge mode of the emergency outlet [5]; [6] at least in the depth difference Δh [10] below the weir edge [30] of the discharge weir [8] designed as a emergency outlet [5] or in case of a vertical lifting pump station [13] designed as a emergency outlet [6] below of a non-critical intake level [2] is fixed and furthermore the moveable cylinder [27] or the pulley rope guidance [16] designed as moving elements [23]; [24] and the accompanying utility cables [28] connected to the measurement sensors [12] are surrounded with the circulation flow protection [22] from the invert reach [17] to the ceiling area [3] inside the wastewater body [1].

3. Method pursuant to Claim 1 and 2, indicated by this, that the vertical rejection of the respective emergency outlet [5]; [6] below of the discharge level [7] or even respective intake level [2] in the case of a non-critical online measurement by at least one quality sensor [14] cause a lowering down; otherwise by an on-line recording of a critical quality measurement of at least one quality sensor [14] a lifting up of the weir will be performed.

4. Method pursuant to Claim 1 to 3, indicated by this, that the sensor wing adapter head [21] of the sensor wing adapter [20] between the circulation flow protection [22] in order to the moving element [23] means that it can be guided all-around, but in the case of the moving element *(pulley rope guidance)* [24] a passageway opening [4] for the free-running pulley rope guidance [16] is available.

## Revendications

1. Procédé pour le réglage qualificatif et quantitatif des eaux usées sur des installations de décharge [5]; [6] par lequel différentes sondes de mesure [12] plongent dans un volume d'eaux usées [1] en dessous du niveau de décharge [7] pour fixer au moyen de mesure en ligne par couches par les sondes de mesure [12] un réglage qualitatif et si nécessaire quantitatif de l'installation de décharge [5]; [6] respective,
**caractérisé par le fait,**
**qu'**une aile de la sonde est équipée de plusieurs différentes sondes et est mue par un élément de déplacement [23]; [24]; [25]; [26],
comme quoi selon la première variante l'élément de déplacement [27] est un cylindre de déplacement et l'aile de sonde [18] est fixée à la tête de la bielle [15],
comme quoi selon une seconde variante l'élément de déplacement est une conduite de poülie [16] à laquelle est fixée l'aile de sonde [18] et mue,
comme quoi selon une troisième variante l'élément de déplacement est une station de pompage [13] mobile qui est qualifiée d'installation de décharge et l'aile de sonde [18] est fixée au moyen d'une traverse [20] au dessous du niveau d'aspiration [2],
ou bien
comme quoi selon une quatrième variante l'élément de déplacement représente un barrage de décharge [8] et l'aile de sonde [18] est fixée à une traverse de sonde [20] de l'arête du barrage [30].

2. Procédé suivant revendication 1, **caractérisé par le fait que** l'aile de sonde [18] se trouve dans le modus de décharge des installations de décharge [5]; [6] au moins à la différence de hauteur Δh [10] en dessous de l'arête de barrage [30] de l'installation de décharge formée [5] comme un barrage de décharge ou encore à l'installation de décharge [5] formée comme une station de pompage [13] mobile verticale, en dessous du niveau d'aspiration [2] non critique et en outre en tant qu'éléments de déplacement concus comme cylindre de déplacement [27] ou conduite de poulie [16], les cables d'approvisionnement [28] des sondes de mesure [12] sont enveloppés de protection de circulation [22] de la zone de la sole [17] jusqu'à la zone du plafond [3] de volume des eaux usées [1].

3. Procédé suivant revendication 1 et 2, **caractérisé par le fait que** le réglage vertical de chaque installation de décharge [5]; [6] soit effectué en dessous du niveau de décharge [7] ou encore niveau d'aspiration [2, étant donné un mesurage en ligne qualitatif non critique au moins d'une sonde de mesure qualité [14] vers le bas ; en outre étant donné un mesurage en ligne qualitatif critique au moins d'une sonde de mesure qualité [14] vers le haut.

4. Procédé suivant revendication de 1 à 3 **caractérisé par le fait que** la tête de traverse [21] de la traverse [20] à l'intérieur de la protection de circulation [22] puisse être guidée [23] de facon mobile de tous côtés par les éléments de déplacement [24] concus comme cylindre de déplacement ou conduite de poulie [24] et au moins qu'une ouverture de passage [4] soit existante pour la conduite de poulie [16] libre dans le cas d'élément de déplacement.
